# EUROPEAN PATENT SPECIFICATION

(11) **EP 2 407 422 B1**
(45) Date of publication and mention of the grant of the patent: **19.04.2017**
(21) Application number: 10750578.6
(22) Date of filing: 10.03.2010
(51) Int. Cl.: C01B 25/45, H01M 4/136, H01M 10/0525, H01M 4/58

(54) **METHOD FOR PRODUCING IRON LITHIUM PHOSPHATE**
VERFAHREN ZUR HERSTELLUNG VON EISENLITHIUMPHOSPHAT
PROCÉDÉ DE PRODUCTION DE PHOSPHATE DE LITHIUM ET DE FER

(30) Priority: 13.03.2009 JP 2009061867; 21.07.2009 JP 2009170321; 30.11.2009 JP 2009272731
(43) Date of publication of application: 18.01.2012
(73) Proprietor: JFE Chemical Corporation, Tokyo 111-0051 (JP)
(72) Inventor: TAHARA, Tomoyuki, Tokyo 111-0051 (JP); SAKAI, Minoru, Tokyo 111-0051 (JP)
(74) Representative: Hoffmann Eitle
(86) International application number: PCT/JP2010/001691
(87) International publication number: WO 2010/103821

(56) References cited:
- WO-A1-2004/036671
- JP-A- 2005 067 924
- JP-A- 2006 131 485
- JP-A- 2007 022 894
- JP-A- 2007 305 585
- JP-A- 2008 004 317
- JP-A- 2009 123 705
- US-A1- 2007 207 080
- US-A1- 2007 207 385
- V. SINKA ET AL: "The Influence of Iron Powder Grade and Manganese Carrier on the Homogeneity Modulus of Sintered Mn Steels", MATERIALS SCIENCE FORUM, vol. 416-418, 21 November 2003 (2003-11-21), pages 455-463, XP055224374, DOI: 10.4028/www.scientific.net/MSF.416-418.455

## Description

### Field of the Invention

The present invention relates to a method for producing a cathode active material for a secondary battery represented by a lithium-ion battery, and more particularly to a method for producing lithium iron phosphate.

### Description of the related arts

With respect to a miniaturized lithium-ion battery which has become widespread mainly in the field of mobile apparatuses, the enhancement of the performance has been realized through the improvement on an anode active material or the development of an electrolytic solution or the like. On the other hand, with respect to a cathode active material, no remarkable technical innovation has been made up to now from the time that the commercialization of miniaturized lithium-ion battery started, and lithium cobaltate (LiCoO₂) which contains expensive rare metal has been used mainly. Besides being expensive, lithium cobaltate is not sufficient in thermal stability and chemical stability and emits oxygen under a high temperature of approximately 180°C thus giving rise to a possibility of firing an organic electrolyte whereby there still remains a drawback in terms of safety.

Accordingly, in the development of the use of the lithium-ion battery which envisages the future use of the lithium-ion battery in a large-sized apparatus, the development of a cathode active material which is cheaper than conventionally used lithium cobaltate and is thermally and chemically stable for securing high safety is indispensable.

Currently, a material which is considered promising as a new cathode active material capable of replacing lithium cobaltate is olivine lithium iron phosphate (LiFePO₄ simply referred to as "lithium iron phosphate" hereinafter) which is an iron-based active material and exhibits high safety in addition to less restriction in terms of resource problems and less toxicity. Lithium iron phosphate is a highly safe active material since lithium iron phosphate does not emit oxygen up to approximately 400°C because of strong P-O bonding in the crystalline structure, and is also an active material which exhibits excellent long-period stability and rapid charge characteristics.

In using lithium iron phosphate as a cathode active material, to allow lithium iron phosphate to secure a high-speed charge/discharge characteristic which is a characteristic that the cathode active material is requested to satisfy, it is necessary to improve the electron conduction of lithium iron phosphate and to shorten a diffusion distance of lithium ions.

As a measure to cope with such problems, it is considered effective to cover surfaces of lithium iron phosphate particles with a conductive material and to form lithium iron phosphate particles into fine particles having a size of approximately 100 nm or less thus increasing a reaction surface area. Further, it has been also reported that doping other elements on lithium iron phosphate is effective in improving the electron conduction and the stabilization of the crystalline structure.

Accordingly, as described above, the development of a method for producing fine lithium iron phosphate particles whose surfaces are covered with an electric conductive material stably at a low cost becomes important to realize the practical use of lithium iron phosphate as a cathode active material.

As a method for producing lithium iron phosphate which aims at the lowering of cost, a method which uses inexpensive iron particles as an iron source has been known.

For example, in patent document 1, there is disclosed a method where metallic iron and a compound liberating a phosphoric acid ion are firstly made to react with each other in an aqueous solution and, thereafter, lithium carbonate or lithium hydroxide is added to the aqueous solution to prepare a precursor of lithium iron phosphate and the precursor is dried, the dried material is subj ect to primary baking at a temperature within a temperature range from 300 to 450°C, and a substance from which conductive carbon is formed by thermo decomposition is added to the baking material, and the mixture is baked at a temperature of 500 to 800°C.

However, in the above-mentioned method described in patent document 1, since the metallic iron of high purity of 99.9% or more is made to react with a phosphoric acid in preparing the precursor, aggregate particles of iron phosphate (Fe₃(PO₄)₂·8H₂O) which is a sparingly soluble bivalent iron compound are formed and grown and a solution becomes a creamy high-viscosity material which exhibits color ranging from white to light blue. As a result, the agitation of solution becomes insufficient thus giving rise to drawbacks including a drawback that unreacted metallic iron is liable to remain and a drawback that raw materials are not uniformly mixed with each other. Further, also in the method disclosed in patent document 1, an acid such as a hydrochloric acid or an oxalic acid is added so as to promote a reaction of unreacted metallic iron. However, when a hydrochloric acid is added, a product is liable to be oxidized, while when an oxalic acid is added, it is difficult to uniformly prepare a precursor due to the formation of stable iron oxalate as a deposit in the form of a single body or the like. Further, it is difficult to uniformly mix carbon black or the like which is added as conductive carbon to a precursor at an atomic level and hence, an effect of carbon black or the like as a reducing agent is small in a temperature range of primary baking where the precursor is liable to be oxidized.

Patent document 2 discloses a method in which iron powder, a lithium salt and a phosphate compound are dissolved in an organic acid aqueous solution to prepare a precursor and, then, the precursor is dried by spraying, and thereafter, a dried material is baked at a temperature of 500°C or more.

However, the above-mentioned method described in patent document 2 has a drawback that although an effective bivalent iron can be formed by oxidizing iron with an organic acid or a mixed organic acid, it is difficult to make bivalent iron present in a stable state. Further, when lithium salt is lithium nitrate, nitrate ion acts as an oxidant at the time of baking. Further, although it may be possible to use lithium acetate as lithium salt, lithium acetate is an expensive raw material and hence, the use of lithium acetate is not proper in lowering cost. Further, although organic compounds which generate pyrolytic carbon are mixed in a precursor solution in the above-mentioned method, some organic compounds are carbonized alone at the time of baking so that surfaces of lithium iron phosphate particles cannot be effectively covered with pyrolytic carbon.

Patent document 3 describes a method where firstly iron powder is made to react in an aqueous solution containing a phosphoric acid and a citric acid, lithium hydroxide is added to the aqueous solution and, then, a precursor is prepared by adding metal oxide or a metal salt which is changed to conductive oxide by baking to the aqueous solution, and the precursor is dried and, finally, a dried product of the precursor is baked.

However, in the above-mentioned method, the citric acid does not effectively act as a chelating agent when iron powder reacts with the phosphoric acid so that iron in the precursor is oxidized to trivalence to form ferric phosphate which is a trivalent iron compound. Further, the method describes an example where vanadium oxide V₂O₅ is added as a conductive oxide. However, in this method, vanadium oxide is added after the formation of the precursor of lithium iron phosphate and hence, vanadium is not doped and is adhered to peripheries of lithium iron phosphate particles.

Patent document 4 describes a method for producing lithium iron phosphate for battery where the lithium iron phosphate is formed by baking a mixture which contains iron powder having an average particle size of 20 to 150 µm and apparent density of 2 g/cm³ or less, a phosphate compound and a lithium compound.
However, the method described in patent document 4 also, in the same manner as the method described in patent document 2, has a drawback that it is difficult to make bivalent iron present in a stable state.

US 2007/207385 A1 discloses a method to make lithium iron phosphate by initially preparing a solution of phosphoric acid and citric acid, to which iron powder is added. Upon mixing, lithium hydroxide is added and further left to react. The product is spray-dried and subsequently baked.

US 2007/207080 A1 discloses a method of making make lithium iron phosphate by mixing an acid and iron powder, further drying and subsequently baking the product. The iron source is acknowledged to be NC-100.24.

### Prior art literature

### Patent document

Patent document 1 WO2004/036671 Patent document 2 JP-A-2006-131485 Patent document 3 JP-A-2007-305585 Patent document 4 JP-A-2008-4317

### Summary of the Invention

### Problems to be solved by the Invention

As set forth above, when iron particles are used as an iron source in a method for synthesizing lithium iron phosphate, the prior art cannot sufficiently control the reaction of iron
particles. Accordingly, due to a reason that unreacted iron particles remain, a reason that the oxidation of iron excessively progresses so that a crystalline trivalent iron compound is formed or the like, a precursor of lithium iron phosphate cannot be uniformly mixed and prepared at an atomic level whereby lithium iron phosphate which is obtained as a final product cannot secure a sufficient discharge capacity. Further, in improving various characteristics of lithium iron phosphate by doping other elements on the lithium iron phosphate, the prior art cannot dope other elements on the lithium iron phosphate uniformly.

The present invention has been made under such circumstances, and it is an object of the present invention to provide a method for producing a cathode active material made of inexpensive lithium iron phosphate possessing a high discharge capacity by preparing a precursor of lithium iron phosphate where components are uniformly mixed at an atomic level by controlling a reaction of iron particles.

### Means for solving the problems

Inventors of the present invention have made extensive studies to solve the above-mentioned problems. As a result, the inventors have made a finding that, in producing lithium iron phosphate having a high discharge capacity as a cathode active material using an inexpensive iron particle raw material, it is effective to determine an amount of oxygen chemically bonded to iron particles, to allow a carboxylic acid to coexist when the iron particles and the phosphoric acid are made to react with each other, and to cause the reaction in an oxidizing atmosphere. The inventors also have made a finding that a chelate substance of iron phosphate which uniformly disperses in an aqueous solution is obtained by the above-mentioned reaction, and by adding a lithium source to the aqueous solution subsequently, a precursor of lithium iron phosphate in which raw materials are uniformly mixed at an atomic level is obtained. Further, the inventors have found that, in improving various characteristics of lithium iron phosphate by doping other elements on the lithium iron phosphate, by adding elements which can be doped on an aqueous solution which contains a phosphoric acid and a carboxylic acid, lithium iron phosphate which is uniformly doped with the elements can be obtained.

The present invention has been made based on such findings.

A method for producing lithium iron phosphate according to the present invention includes: an aqueous solution preparing step of preparing an aqueous solution; a first forming step of forming a first reaction liquid; a second forming step of forming a second reaction liquid; a precursor forming step; and a primary baking step.

The aqueous solution preparing step comprises preparing an aqueous solution containing a phosphoric acid and a carboxylic acid.

The first forming step comprises adding iron particles containing 0.5 mass% or more of oxygen to the aqueous solution, and making the phosphoric acid and the carboxylic acid and the iron particles react with each other in the aqueous solution under an oxidizing atmosphere, to form a first reaction liquid.

The second forming step comprises adding a lithium source to the first reaction liquid obtained in the first forming step, to form a second reaction liquid.

The precursor forming step comprises drying the second reaction liquid to form the lithium iron phosphate precursor.

The primary baking step comprises baking the lithium iron phosphate precursor under a non-oxidizing atmosphere to obtain lithium iron phosphate.

A phosphoric acid used in the aqueous solution preparation step may preferably be an orthophosphoric acid.

The carboxylic acid used in the aqueous solution preparation step may preferably be at least one selected from the group consisting of a tartaric acid, a malic acid and a citric acid. A content of carboxylic acid may preferably be 0.18 to 0.5 mol for 1 mol of iron in the iron particles. A residual carbon rate of the carboxylic acid may preferably be 3 mass% or more. The residual carbon rate of the carboxylic acid may more preferably be 3 to 20 mass%.

The iron particles may preferably be at least one selected from the group consisting of reduced iron powder, atomized iron powder and electrolytic iron powder. Further, the iron particles may preferably contain 0.6 to 2 mass% of oxygen.

It is desirable that lithium source in the second forming step is a water-soluble lithium salt.

To dope other elements on lithium iron phosphate, it is desirable to dissolve metal or a compound which is an element to be doped in an aqueous solution containing a phosphoric acid and a carboxylic acid in the aqueous solution preparation step.

It is desirable that the precursor forming step comprises drying the second reaction liquid by a spray drying method to form the lithium iron phosphate precursor.

It is preferable that the primary baking step comprises baking the lithium iron phosphate precursor under a non-oxidizing atmosphere at a temperature of 300°C or more to obtain the lithium iron phosphate.

It is desirable that the method for producing lithium iron phosphate according to the present invention further comprises a secondary baking step of mixing the lithium iron phosphate obtained in the primary baking step and a carbon source, and baking the mixture under a non-oxidizing atmosphere thus obtaining lithium iron phosphate whose surface is covered with carbon. It is desirable that the carbon source is a substance which generates carbon through thermal decomposition thereof at the time of secondary baking or conductive carbon. The carbon source may preferably be added such that a carbon content contained in lithium iron phosphate after the secondary baking becomes 1 to 5 mass%.

It is desirable to use the lithium iron phosphate as a cathode active material for a secondary battery.

### Advantages of the Invention

According to the present invention, it is possible to produce lithium iron phosphate excellent in high-speed charge/discharge characteristics which are important characteristics to be satisfied by a cathode active material at a low cost and in a stable manner.

The present invention is explained in detail hereinafter.

The method for producing lithium iron phosphate according to the present invention includes:
an aqueous solution preparing step of preparing an aqueous solution containing a phosphoric acid and a carboxylic acid;
a first forming step of adding iron particles containing 0.5 mass% or more of oxygen to the aqueous solution, and making the phosphoric acid and the carboxylic acid and the iron particles react with each other in the aqueous solution under an oxidizing atmosphere, to form a first reaction liquid;
a second forming step of adding a lithium source to the first reaction liquid obtained in the first forming step, to form a second reaction liquid;
a precursor forming step of drying the second reaction liquid to form a lithium iron phosphate precursor; and
a primary baking step of baking the lithium iron phosphate precursor under a non-oxidizing atmosphere thus obtaining lithium iron phosphate.

As iron particles, it is possible to use reduced iron powder which is produced by reducing mill scales (ferric oxide) using coke, atomized iron powder which is produced by pulverizing and cooling molten steel using highly-pressurized water, electrolytic iron powder which is produced by precipitating on an anode by applying electrolysis to aqueous ferric salt solution or the like. An average particle size of iron powder may preferably be 100 µm or less. Although an average particle size of ordinary general-industry-use iron powder is 70 to 80 µm, ordinary general-industry-use iron powder contains particles having a maximum particle size of 150 to 180 µm. Accordingly, the use of iron powder after increasing a reaction surface by removing coarse particles using a sieve or turning coarse particles into fine particles by mechanical milling or the like when necessary is advantageous for synthesizing chelate substances of iron phosphate while promoting a subsequent reaction of iron powder with phosphate and a carboxylic acid.

In the present invention, oxygen contained in iron powder indicates oxygen which is chemically bonded to iron. It is a prerequisite that oxygen content is 0.5 mass% or more for synthesizing chelate substances of iron phosphate. The oxygen content may preferably be 0.6 mass% or more. When the oxygen content of iron particles is less than 0.5 mass%, priority is assigned to a direct reaction between metallic iron and a phosphoric acid so that aggregate particles of iron phosphate (Fe₃(PO₄)₂·8H₂O) which is an sparingly soluble bivalent iron compound are formed and grown whereby the solution becomes a creamy high-viscosity material which exhibits color ranging from white to light blue. As a result, the agitation of solution becomes insufficient thus giving rise to drawbacks including a drawback that unreacted metallic iron is liable to remain and a drawback that raw materials are not uniformly mixed with each other. When the oxygen content of iron particles is 2 mass% or less, there is no segregation of scales of ferric oxide on surfaces of iron powder whereby a reaction between iron powder and an aqueous solution of phosphoric acid and a carboxylic acid is not impeded. Accordingly, the oxygen content of iron particles may preferably be 2 mass% or less. The determination of oxygen content in iron particles is performed in accordance with a vacuum melting infrared absorbing method stipulated in JIS Z 2613 (1992) using TC436 made by LECO Corporation.

To set an oxygen content of iron particles to 0.5 mass% or more, in a case where reduced iron powder is used as a raw material, for example, a temperature at which mill scales (ferric oxide) are reduced using coke may be set to a temperature of approximately 800 to 1000°C lower than a usual temperature of 1000 to 1200°C.

Further, to use water atomized iron powder as a raw material, molten steel is pulverized and cooled using highly pressurized water and, thereafter, pulverized steel may be positively brought into contact with air in a drying step.

To elevate purity of iron particles, usually, raw-material iron powder is subject to hydrogen reduction thus producing iron particles having oxygen content of approximately 0.4 mm% or less. Accordingly, iron particles used in the present invention may be produced by adjusting the degree of hydrogen reduction.

A phosphoric acid may preferably be an aqueous solution of an orthophosphoric acid (H₃PO₄). However, an aqueous solution of higher-order condensed phosphoric acid (Hₙ₊₂PₙO₃ₙ₊₁) may be also used as a phosphoric acid. An orthophosphoric acid which amounts to 75 to 85 mass% can be usually used as an industrial product. An addition amount of a phosphoric acid is 1 mol for 1 mol of iron in terms of a stoichiometric equivalent. However, there is no problem even when the addition amount of phosphoric acid exceeds 1 mol by approximately 0.1 mol.

A carboxylic acid indicates an organic compound having a carboxyl group, and functions as a chelating agent at the time of synthesizing chelate substances of iron phosphate. As the above-mentioned carboxylic acid used in the present invention, a carboxylic acid which exhibits a strong chelating force for iron, for example, a tartaric acid, a malic acid, a citric acid and the like can be named. Among these carboxylic acids, it is particularly preferable to use the citric acid which exhibits a strong chelating force and forms a hardly-oxidized chelating substance.

Further, carbon remains at the time of baking and hence, the carboxylic acid also functions as a reducing agent. To allow the carboxylic acid to exhibit such a function, in the present invention, it is desirable to set a residual carbon ratio of the carboxylic acid to 3 mass% or more. When the residual carbon ratio of the carboxylic acid is less than 3 mass%, the precursor is liable to be oxidized with a trace amount of oxygen existing in the atmosphere.

Further, it is preferable to set the above-mentioned residual carbon ratio to 20 mass% or less. When the residual carbon ratio exceeds 20 mass%, residual carbon content after baking becomes excessive. With respect to the residual carbon ratio of the above-mentioned carboxylic acid, the residual carbon ratio is 7 mass% in case of a tartaric acid, the residual carbon ratio is 12 mass% in case of a malic acid, the residual carbon ratio is 7 mass% in case of a citric acid hydrate, and the residual carbon ratio is less than 1 mass% in case of oxalic acid dehydrate, an acetic acid or the like.

In the present invention, "residual carbon rate" is a value obtained in such a manner that residual carbon after baking is determined in accordance with a high-frequency induction heating farness combustion-infrared absorption method stipulated in JIS G 1211 (1995), and the residual carbon is divided by an initial amount of carboxylic acid.

A content of carboxylic acid may preferably be set to 0.18 to 0.5 mol for 1 mol of iron, and may preferably be set to 0.2 to 0.4 mol for 1 mole of iron. When the content of carboxylic acid is less than 0.18 mol, the abode-mentioned chelating effect derived from a carboxylic acid is decreased and hence, metallic iron and phosphoric acid ion directly react with each other and hence, aggregate particles of sparingly soluble iron phosphate are formed and grown whereby the solution becomes a creamy high-viscosity material which exhibits color ranging from white to light blue. As a result, the agitation of aqueous solution becomes insufficient thus giving rise to drawbacks including a drawback that unreacted metallic iron is liable to remain and a drawback that raw materials are not uniformly mixed with each other. On the other hand, when the above-mentioned content of carboxylic acid exceeds 0.5 mol, synthesized chelate substances of iron phosphate are uniformly dispersed in the aqueous solution (raw materials being mixed uniformly). However, residual carbon content after baking becomes excessive. As a result, an apparent discharge capacity of lithium iron phosphate obtained as a final product is lowered.

As an atmosphere where a reaction is made by adding iron particles to an aqueous solution which contains a phosphoric acid and a carboxylic acid, it is necessary to set an oxidizing atmosphere. It is because when a chelating reaction progresses and oxygen on surfaces of iron particles is consumed, a chelating reaction cannot be sustained and hence, priority is assigned to a direct reaction between metallic iron and phosphoric acid ion whereby sparing soluble aggregate particles of iron phosphate are formed and grown.

In view of such a circumstance, according to the present invention, by bringing the above-mentioned atmosphere at the time of reaction into an oxidizing atmosphere, oxygen is supplemented by properly oxidizing surfaces of iron particles thus sustaining the chelating reaction. In the present invention, the oxidizing atmosphere indicates a state where surfaces of iron particles in an aqueous solution can be properly oxidized. Such a state is obtained, for example, by bringing an interface of the aqueous solution and an oxygen containing gas into contact with each other, by introducing bubbles or nano-bubbles of dissolved oxygen or oxygen containing gases in an aqueous solution or the like. Further, as a specific manipulation, the agitation under an air atmosphere, bubbling of air or the like can be named.

In the above-mentioned chelating reaction, an aqueous solution temperature may preferably be controlled within a range from 10 to 40°C, and may be more preferably controlled within a range from 20 to 30°C. By controlling the aqueous solution temperature within a range from 10 to 40°C, surfaces of iron particles which newly appear due to consumption of oxygen by the above-mentioned chelating reaction are properly oxidized as being brought into contact with dissolved oxygen, air bubbles or the like in the aqueous solution whereby chelate substances of iron phosphate can be continuously formed. When the aqueous solution temperature is less than 10°C, the chelating reaction of iron particles becomes slow and hence, it takes a long time before the reaction is completely finished. On the other hand, when the aqueous solution temperature exceeds 40°C, the oxidation for supplementing oxygen to surfaces of iron particles where oxygen is consumed cannot catch up with the consumption of oxygen. Accordingly, priority is assigned to a direct reaction between metallic iron and a phosphoric acid so that aggregate particles of sparingly soluble iron phosphate are formed and grown thus giving rise to a possibility that the solution becomes a creamy high-viscosity material which exhibits color ranging from white to light blue.

According to the present invention, when iron particles are added to an aqueous solution which contains a phosphoric acid and a carboxylic acid, and the aqueous solution is exposed to an oxidizing atmosphere, the carboxylic acid chelates iron by way of oxygen or a hydroxy group present on surfaces of iron particles, and iron phosphate is formed due to bonding of the phosphoric acid with iron by oxidation. As a result, it is estimated that chelate substances of iron phosphate expressed by the following chemical formula 1 is synthesized, and a first reaction liquid in which the chelate substances are uniformly dispersed is obtained.

According to the present invention, by adding a lithium source to the first reaction liquid in which the chelate substances are uniformly dispersed in this manner, a precursor of lithium iron phosphate where raw materials are uniformly mixed at an atomic level is obtained.

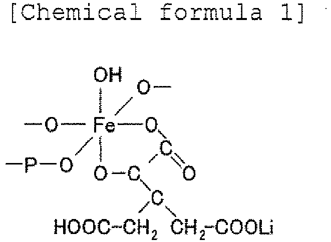

Although a kind of lithium source to be added to the first reaction liquid is not limited provided that the lithium source is a water soluble lithium salt, lithium hydroxide or lithium carbonate which does not generate a harmful gas at the time of baking is particularly preferable. When the lithium source is added to the above-mentioned first reaction liquid, color of the reaction liquid is changed to dark green, and a second reaction liquid having pH of 6 to 7 is obtained. Further, when an X ray diffraction analysis is applied to a dried product obtained by drying the second reaction liquid (precursor of lithium iron phosphate), no crystalline compound is detected, and an amorphous phase derived from chelate substances which are mixed uniformly at an atomic level is confirmed.

It is estimated that when the second reaction liquid is formed by adding the lithium source to the first reaction liquid, some hydrogen in a carboxylic group of the chelate substances expressed by the chemical formula 1 are replaced with lithium so that the chelate substances of lithium iron phosphate expressed by the following chemical formula 2 is formed. Although the chelate substances of lithium iron phosphate is present in the second reaction liquid in a dispersed state, there may be a case where some chelate substances are present in the form of aggregate particles and become a deposit. In such a case, to make the precursor solution uniform, it is desirable to make the aggregate particles fine by wet mechanical milling. As a wet milling method, a beads mill, a wet jet mill, an ultrasonic irradiation or the like is named.

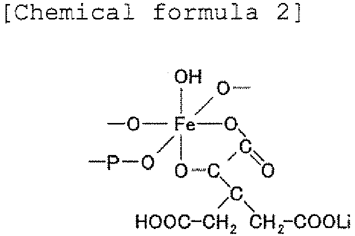

In doping other elements on lithium iron phosphate, by dissolving in advance a metal or compound which is an element to be doped into an aqueous solution which contains a phosphoric acid and a carboxylic acid, the element to be doped can be uniformly mixed into the aqueous solution. For example, as such metal or compound of the element to be doped, Ti(OH)₄, TiOSO₄·H₂O is named in case of titanium, FeV, V₂O₅, VOSO₄·2H₂O is named in case of vanadium, Mg, MgO, Mg(OH)₂ is named in case of magnesium, WO₃, H₂WO₄ is named in case of tungsten, and MnCO₃·nH₂O, Mn(CH₃COO)₂ is named in case of manganese. Here, in case where doped element which is dissolved in advance in an aqueous solution containing a phosphoric acid and a carboxylic acid is reduced due to the addition of iron particles so that the doped element is brought into a low oxidized state, it is expected that the doped element acts as an electron donor. Although a doping amount may depend on a kind of the element, in general, the replacement of 0.1 mol% or more of iron element is preferable, and particularly the replacement of 0.5 mol% or more of iron element is more preferable. When the doping amount is less than 0.1 mol% of the iron element, the doping effect can be hardly acquired. An upper limit of doping amount is largely changed due to factors such as ion radius, valency, coordination number of an element to be doped and hence, the upper limit of the doping amount cannot be necessarily decided. However, when the doping amount exceeds a threshold value, there exists a tendency that characteristics are deteriorated due to the localization of electrons due to the formation of an impurity phase or a change of the band structure.

To dry the second reaction liquid, it is preferable to adopt a spray dry method which exhibits favorable dry efficiency. In the spray dry method, a specimen solution is dried by spraying the specimen solution in high-temperature heated air and hence, powder having a uniform shape can be manufactured. In adopting the spray dry method, it is preferable to set an inlet temperature (heating air temperature) in a spray dry device to 150 to 250°C by taking a fact that an oxidizing temperature of a precursor (of lithium iron phosphate) is approximately 250°C into consideration. When the inlet temperature is set to 150 to 250°C, a reaching temperature of a formed dried product becomes approximately 100 to 150°C although the reaching temperature depends on a balance with a liquid feeding amount. The lithium iron phosphate precursor which is the formed dried product takes a powdery form. A particle size of the precursor is preferably 100 µm or less, is more preferably 80 µm or less, and is still more preferably 50 µm or less. In case where the particle size of precursor exceeds 100 µm, coarse particles remain when milling performed after baking is insufficient, while when an electrode is formed using the precursor as a cathode active material, there exists a possibility that a current collector is damaged.

By baking the lithium iron phosphate precursor at a temperature of 300°C or above under a non-oxidizing atmosphere, H₂O, CO₂, H₂ which are contained in the lithium iron phosphate precursor are eliminated through thermal decomposition, the dried product having an amorphous phase is crystallized whereby a crystalline body of lithium iron phosphate having the olivine structure is obtained. A baking temperature is preferably 300°C or above, and is more preferably 350 to 700°C. When the baking temperature is below 300°C, the elimination of H₂O, CO₂, H₂ which are volatile components through thermal decomposition becomes insufficient, and also crystallization cannot be acquired. On the other hand, with respect to an upper limit of the baking temperature, when the upper limit exceeds 700°C, the coarseness of obtained crystal particles progresses. Accordingly, the upper limit of the baking temperature is preferably 700°C or below. Baking is performed under a non-oxidizing atmosphere to prevent the oxidization of the lithium iron phosphate precursor.

Next, using lithium iron phosphate which is the above-mentioned baked product as a primary baked product, a carbon source is mixed into the primary baked product and, then, the mixture is subjected to secondary baking. Due to such secondary baking, crystallinity of lithium iron phosphate may be enhanced and, at the same time, conductivity of lithium iron phosphate may be enhanced since a surface of lithium iron phosphate is covered with carbon or carbon is adhered to the surface of lithium iron phosphate.

As the carbon source to be mixed to lithium iron phosphate, a substance which forms carbon through thermal decomposition at the time of secondary baking or conductive carbon is used. The substance which forms carbon through thermal decomposition at the time of secondary baking may preferably be a substance which is melted at the time of secondary baking and wets a surface of lithium iron phosphate particles. For example, a saccharide such as glucose, fructose, maltose, sucrose, ascorbic acid or erythorbic acid, carboxymethylcellulose, acenaphthylene, quinoline insoluble-less pitch (quinoline insoluble ≤ 0.1 mass%, ash ≤ 0.01 mass%) or the like can be used. As conductive carbon, for example, carbon black, acetylene black, Ketjen black, VGCF, carbon nano fiber, fullerene or the like can be used. These substances can be used in a single form or in a combination of the plurality of substances.

As a method for mixing the carbon source into the primary baked product, a method where the carbon source is added to the primary baked product before or after the primary baked product is pulverized by wet or dry milling, and the mixture is pulverized using a ball mill, a jet mill or the like. An addition amount of the carbon source is preferably set such that an amount of carbon contained in lithium iron phosphate after secondary baking becomes 1 to 5 mass%, and the addition amount of the carbon source may more preferably be set such that such carbon content becomes 1.5 to 4 mass%. When the carbon content is less than 1 mass%, conductivity of lithium iron phosphate becomes insufficient thus giving rise to a possibility that the performance of lithium iron phosphate particles which constitute a cathode active material cannot be sufficiently taken out. On the other hand, when the carbon content exceeds 5 mass%, there exists a tendency where apparent discharge capacity is lowered. When the secondary baking is performed, the primary baking is preferably performed under a non-oxidizing atmosphere at a temperature of 350 to 400°C. Although lithium iron phosphate surely crystallized by being baked at a temperature of 350°C or above, lithium oxide phosphate particles grow along with the elevation of temperature and hence, it is sufficient to perform primary baking at a temperature of 400°C.

The secondary baking is preferably performed at a temperature of 550 to 750°C under non-oxidizing atmosphere, and the secondary baking is more preferably performed at a temperature of 600 to 700°C. When a substance which generates pyrolytic carbon is used as the carbon source, the generation of pyrolytic carbon becomes insufficient at a temperature below 550°C thus giving rise to a possibility that conductivity of lithium iron phosphate obtained after secondary baking cannot be sufficiently exhibited. On the other hand, when the secondary baking is performed at a temperature exceeding 750°C, there is a possibility that lithium iron phosphate particles become coarse.

As described above, the lithium iron phosphate precursor in which the raw materials are uniformly mixed at an atomic level is obtained in such a manner that iron particles containing 0.5 mass% or more of oxygen are added to an aqueous solution containing a phosphoric acid and a carboxylic acid, chelate substances of iron phosphate are synthesized by making these elements react with each other under an oxidizing atmosphere, and a lithium source is added to the chelate substances and the mixture is dried. Then, by baking the lithium iron phosphate precursor, lithium iron phosphate having high performance can be obtained as an inexpensive cathode active material.

### Embodiments for carrying out the Invention

Although the present invention is specifically explained using examples hereinafter, the present invention is not limited to these examples.

### (Example 1)

10 mol of phosphoric acid of 85 mass% and 2 mol of citric acid hydrate were dissolved in 2000 g of distilled water, 10 mol of iron powder (produced by JFE Steel Corporation, oxygen content: 0.68 mass%, average particle size: 80 µm, apparent density: 3.18 g/cm³) was added to the mixture solution, and a reaction between these materials was continued for 1 day while agitating these materials under an air atmosphere at a liquid temperature of 25 to 30°C. Then, an aqueous solution containing 10 mol of lithium hydroxide was added to the mixture solution thus preparing a precursor of lithium iron phosphate. The precursor was dried by a spray dryer (FOC16 made by OHKAWARA KAKOHKI CO.,LTD.) at an inlet temperature of 200°C thus obtaining dried powder having an average particle size of approximately 30 µm in SEM observation. Primary baking was applied to the dried powder in a nitrogen gas flow at a temperature of 400°C for 5 hours. Then, as a carbon source, 40 g of ascorbic acid was added to the whole primary baking product, and the primary baking product was subjected to wet milling and mixing using a ball mill. Subsequently, the obtained mixture was dried and, thereafter, secondary baking was applied to the obtained mixture in a nitrogen gas flow at a temperature of 600°C for 10 hours. Finally, the baking mixture was subjected to screening using a sieve having meshes of 75 µm thus preparing lithium iron phosphate. An oxygen content of iron powder was determined using TC436 made by LECO Corporation.

Apparent density of iron powder is measured in accordance with JIS Z 2504 (2000).

### (Example 2)

Lithium iron phosphate was prepared in the same manner as the Example 1 except for that 2 mol of malic acid was used in place of citric acid hydrate in the Example 1.

### (Example 3)

Lithium iron phosphate was prepared in the same manner as the Example 1 except for that 2 mol of tartaric acid was used in place of citric acid hydrate in the Example 1.

### (Example 4)

Lithium iron phosphate was prepared in the same manner as the Example 1 except for that an amount of citric acid hydrate was set to 2.5 mol, and an ascorbic acid was not added to the primary baking product in the Example 1.

### (Example 5)

Lithium iron phosphate was prepared in the same manner as the Example 1 except for that iron powder (produced by KISHIDA CHEMICAL Co. , Ltd., oxygen content: 1.55 mass%, average particle size: 70 µm, apparent density: 2.47 g/cm³) was used in the Example 1.

### (Example 6)

Lithium iron phosphate was prepared in the same manner as the Example 1 except for that 0.05 mol (replacing 1 mol% of iron element) of vanadium pentoxide V₂O₅ which is a vanadium source was added to and dissolved in a mixed solution containing a phosphoric acid and a citric acid hydrate, and 9.9 mol of iron powder equal to iron powder used in the Example 1 was added to the mixed solution in the Example 1.

### (Example 7)

Lithium iron phosphate was prepared in the same manner as the Example 1 except for that 0.1 mol (replacing 1 mol% of iron element) of titanyl sulfate which is a titanium source was added to and dissolved in a mixed solution which is phosphoric acid and citric acid hydrate, and 9.9 mol of iron powder equal to iron powder used in the Example 1 was added to the mixed solution in the Example 1.

### (Example 8)

Lithium iron phosphate was prepared in the same manner as the Example 1 except for that 0.1 mol (replacing 1 mol% of iron element) of magnesium oxide which is a magnesium source was added to and dissolved in a mixed solution which is phosphoric acid and citric acid hydrate, and 9.9 mol of iron powder equal to iron powder used in the Example 1 was added to the mixed solution in the Example 1.

### (Example 9)

Lithium iron phosphate was prepared in the same manner as the Example 1 except for that 0.1 mol (replacing 1 mol% of iron element) of manganese acetate which is a manganese source was added to and dissolved in a mixed solution which is phosphoric acid and citric acid hydrate, and 9.9 mol of iron powder equal to iron powder used in the Example 1 was added to the mixed solution in the Example 1.

### (Comparative example 1)

Lithium iron phosphate was prepared in the same manner as the Example 1 except for that iron powder (produced by JFE Steel Corporation, oxygen content: 0.41 mass%, average particle size: 80 µm, apparent density: 2.55 g/cm³) was used in the Example 1.

### (Comparative example 2)

Lithium iron phosphate was prepared in the same manner as the Example 1 except for that the agitation of solution after iron powder was added was performed under a nitrogen atmosphere in the Example 1.

### (Comparative example 3)

Lithium iron phosphate was prepared in the same manner as the Example 1 except for that 2 mol of oxalic acid dehydrate was used in place of citric acid hydrate in the Example 1.

With respect to respective lithium iron phosphates which were prepared by the Examples 1 to 9 and the comparative examples 1 to 3, identification analysis based on an X-ray diffraction analysis and quantitative analysis of carbon were performed. Primary particle sizes were also measured with respect to the respective lithium iron phosphates. The X-ray diffraction analysis was performed using UltimaIV (X-Ray: Cu-Kα1) made by Rigaku Corporation. The quantitative analysis of carbon was performed using EMIA-620 made by HORIBA, Ltd. by determining a carbon content of lithium iron phosphate. The primary particle size was obtained by an X-ray diffraction analysis using Scherrer equation.

Further, with respect to respective lithium iron phosphates which were prepared by the Examples 1 to 9 and the comparative examples 1 to 3, discharge capacity was measured using a following method. A cathode was prepared in such a manner that a paste having the composition consisting of lithium iron phosphate, acetylene black, polyvinylidene fluoride (KFL #1320 made by KUREHA CORPORATION) at a mass ratio of 86:4:10 was applied to a current collector by coating at 10 mg/cm². An anode was prepared by assembling a half cell (made by Hohsen Corp.) using metallic lithium. An electrolyte having the composition consisting of 1 MLiPF₆/EC (ethylene carbonate) and EMC (ethylmethyl carbonate) at a mass ratio of 3: 7 was used. A measuring condition was set such that discharge capacity is obtained by performing a constant current charge up to 4.0 V at 0.2 mA/cm² and, thereafter, by performing a constant current discharge down to 2.5 V at 0.2 mA/cm².

The result of measurement of the above-mentioned identification analysis, carbon content, primary particle size and discharge capacity is shown in Table 1. As can be clearly understood from Table 1, in all Examples 1 to 9, the carbon content is 1.5 mass% or more, and the primary particle size is 100 nm or less, and olivine lithium iron phosphate possessing high discharge capacity was obtained. Particularly, discharge capacity in the Examples 6 to 9 is slightly larger than discharge capacity in the Examples 1 to 5 and hence, it is estimated that such a discharge capacity enhancing effect is brought about by doping. On the other hand, the comparative examples 1 to 3 cannot obtain lithium iron phosphate possessing sufficient discharge capacity. It is estimated that phosphorus, iron and lithium are not mixed uniformly at an atomic level in the comparative examples 1 to 3.

### [Table 1]

**Table 1**

| | Formed phase | Carbon content (mass%) | Primary particle size (nm) | Discharge capacity (mAh/g) |
|---|---|---|---|---|
| Example 1 | LiFePO₄ (olivine) | 1.9 | 76 | 156 |
| Example 2 | LiFePO₄ (olivine) | 2.0 | 70 | 151 |
| Example 3 | LiFePO₄ (olivine) | 1.9 | 88 | 152 |
| Example 4 | LiFePO₄ (olivine) | 1.8 | 82 | 150 |
| Example 5 | LiFePO₄ (olivine) | 2.0 | 74 | 154 |
| Example 6 | LiFe_{0.99}V_{0.01}O₄ (olivine) | 2.0 | 62 | 158 |
| Example 7 | LiFe_{0.99}Ti_{0.01}PO₄ (olivine) | 2.0 | 64 | 157 |
| Example 8 | LiFe_{0.99}Mg_{0.01}PO₄ (olivine) | 2.0 | 62 | 158 |
| Example 9 | LiFe_{0.99}Mn_{0.01}PO₄ (olivine) | 2.0 | 60 | 157 |
| Comparative example 1 | LiFePO₄ (olivine) | 1.9 | 88 | 140 |
| Comparative example 2 | LiFePO₄ (olivine) | 1.9 | 74 | 142 |
| Comparative example 3 | LiFePO₄ (olivine), impurity phase | 1.2 | 90 | 135 |

### Industrial Applicability

The present invention provides a method for producing lithium iron phosphate possessing a high discharge capacity as an inexpensive cathode active material by using inexpensive iron particles as an iron source.

## Claims

1. A method for producing lithium iron phosphate comprising:
an aqueous solution preparing step of preparing an aqueous solution containing a phosphoric acid and a carboxylic acid;
a first forming step of adding iron particles containing 0.5 mass% or more of oxygen to the aqueous solution, and making the phosphoric acid and the carboxylic acid and the iron particles react with each other in the aqueous solution under an oxidizing atmosphere, to form a first reaction liquid;
a second forming step of adding a lithium source to the first reaction liquid obtained in the first forming step, to form a second reaction liquid;
a precursor forming step of drying the second reaction liquid to form a lithium iron phosphate precursor; and
a primary baking step of baking the lithium iron phosphate precursor under a non-oxidizing atmosphere to obtain lithium iron phosphate.

2. The method for producing lithium iron phosphate according to claim 1, wherein the phosphoric acid is an orthophosphoric acid.

3. The method for producing lithium iron phosphate according to claim 1, wherein the carboxylic acid is at least one selected from the group consisting of a tartaric acid, a malic acid and a citric acid.

4. The method for producing lithium iron phosphate according to claim 1, wherein the carboxylic acid has a content of 0.18 to 0.5 mol for 1 mol of iron in the iron particles.

5. The method for producing lithium iron phosphate according to claim 1, wherein the carboxylic acid has a residual carbon rate of 3 mass% or more.

6. The method for producing lithium iron phosphate according to claim 5, wherein the residual carbon rate of the carboxylic acid is 3 to 20 mass%.

7. The method for producing lithium iron phosphate according to claim 1, wherein the iron particles are at least one selected from the group consisting of reduced iron powder, atomized iron powder and electrolytic iron powder.

8. The method for producing lithium iron phosphate according to claim 1, wherein the iron particles have an oxygen content of 0.6 to 2 mass%.

9. The method for producing lithium iron phosphate according to claim 1, wherein the lithium source is a water soluble lithium salt.

10. The method for producing lithium iron phosphate according to claim 1, wherein the aqueous solution preparing step comprises dissolving metal or a compound of an element to be doped in the aqueous solution containing the phosphoric acid and the carboxylic acid.

11. The method for producing lithium iron phosphate according to claim 1, wherein the precursor forming step comprises drying the second reaction liquid by a spray dry method to form the lithium iron phosphate precursor.

12. The method for producing lithium iron phosphate according to claim 1, wherein the primary baking step comprises baking the lithium iron phosphate precursor under a non-oxidizing atmosphere at a temperature of 300°C or more to obtain the lithium iron phosphate.

13. The method for producing lithium iron phosphate according to claim 1, further comprising a secondary baking step of mixing the lithium iron phosphate obtained in the primary baking step and a carbon source, and baking the mixture under a non-oxidizing atmosphere thus obtaining the lithium iron phosphate whose surface is covered with carbon.

14. The method for producing lithium iron phosphate according to claim 13, wherein the carbon source is a substance which generates carbon through thermal decomposition thereof at the time of the secondary baking or conductive carbon.

15. The method for producing lithium iron phosphate according to claim 13, wherein the carbon source is added to the lithium iron phosphate such that an amount of carbon contained in the lithium iron phosphate after the secondary baking becomes 1 to 5 mass%.

## Patentansprüche

1. Verfahren zum Herstellen von Lithiumeisenphosphat, mit:
einem Schritt einer Bereitstellung einer wässrigen Lösung des Herstellens einer wässrigen Lösung, die eine Phosphorsäure und eine Carbonsäure enthält;
einem ersten Ausbildungsschritt des Zugebens von Eisenpartikeln die 0,5 Masse-% oder mehr von Sauerstoff enthalten zu der wässrigen Lösung und bewirken, dass die Phosphorsäure und die Carbonsäure und die Eisenpartikel miteinander in der wässrigen Lösung unter einer oxidierenden Atmosphäre reagieren, um eine erste Reaktionsflüssigkeit auszubilden;
einem zweiten Ausbildungsschritt des Zugebens einer Lithiumquelle zu der ersten Reaktionsflüssigkeit, die in dem ersten Ausbildungsschritt erhalten wurde, um eine zweite Reaktionsflüssigkeit auszubilden, und
einem Precursor-Ausbildungsschritt des Trocknens der zweiten Reaktionsflüssigkeit, um einen Lithiumeisenphosphat-Precursor auszubilden, und
einem ersten Backschritt des Backens des Lithiumeisenphosphat-Precursors unter einer nicht-oxidierenden Atmosphäre, um Lithiumeisenphosphat zu erhalten.

2. Verfahren zum Herstellen von Lithiumeisenphosphat nach Anspruch 1, wobei
die Phosphorsäure eine Orthophosphorsäure ist.

3. Verfahren zum Herstellen von Lithiumeisenphosphat nach Anspruch 1, wobei
die Carbonsäure zumindest eine ausgewählt aus der Gruppe bestehend aus Weinsäure, Apfelsäure und Zitronensäure ist.

4. Verfahren zum Herstellen von Lithiumeisenphosphat nach Anspruch 1, wobei
die Carbonsäure einen Gehalt von 0,18 bis 0,5 Mol für 1 Mol von Eisen in den Eisenpartikeln aufweist.

5. Verfahren zum Herstellen eines Lithiumeisenphosphats nach Anspruch 1, wobei
die Carbonsäure eine Restkohlenstoffrate von 3 Masse-% oder mehr aufweist.

6. Verfahren zum Herstellen von Lithiumeisenphosphat nach Anspruch 5, wobei
die Restkohlenstoffrate der Carbonsäure 3 bis 20 Masse-% beträgt.

7. Verfahren zum Herstellen von Lithiumeisenphosphat nach Anspruch 1, wobei
die Eisenpartikel zumindest eines ausgewählt aus der Gruppe bestehend aus reduziertem Eisenpulver, atomisierten Eisenpulver und elektrolytischen Eisenpulver sind.

8. Verfahren zum Herstellen von Lithiumeisenphosphat nach Anspruch 1, wobei
die Eisenpartikel einen Sauerstoffgehalt von 0,6 bis 2 Masse-% aufweisen.

9. Verfahren zum Herstellen von Lithiumeisenphosphat nach Anspruch 1, wobei
die Lithiumquelle ein wasserlösliches Lithiumsalz ist.

10. Verfahren zum Herstellen eines Lithiumeisenphosphats nach Anspruch 1, wobei
der Schritt zur Bereitstellung einer wässrigen Lösung auflösen von Metall oder einer Verbindung eines Elements, das in die wässrige Lösung, welche die Phosphorsäure und die Carbonsäure enthält dotiert werden soll, aufweist.

11. Verfahren zum Herstellen eines Lithiumeisenphosphats nach Anspruch 1, wobei
der Precursor-Ausbildungsschritt trocknen der zweiten Reaktionsflüssigkeit durch ein Sprühtrocknungsverfahren aufweist, um den Lithiumeisenphosphat-Precursor auszubilden.

12. Verfahren zum Herstellen von Lithiumeisenphosphat nach Anspruch 1, wobei
der primäre Backschritt backen des Lithiumeisenphosphat-Precursors unter einer nicht-oxidierenden Atmosphäre bei einer Temperatur von 300°C oder mehr aufweist, um das Lithiumeisenphosphat zu erhalten.

13. Verfahren zum Herstellen von Lithiumeisenphosphat nach Anspruch 1, ferner mit
einem zweiten Backschritt des Mischens des Lithiumeisenphosphats, das in dem ersten Backschritt erhalten worden ist und einer Kohlenstoffquelle und Backen der Mischung unter einer nicht-oxidierenden Atmosphäre, wodurch das Lithiumeisenphosphat erhalten wird, dessen Oberfläche mit Kohlenstoff bedeckt ist.

14. Verfahren zum Herstellen eines Lithiumeisenphosphats nach Anspruch 13, wobei
die Kohlenstoffquelle eine Substanz ist, die Kohlenstoff durch thermale Zersetzung davon zum Zeitpunkt des zweiten Backens erzeugt oder leitfähiger Kohlenstoff ist.

15. Verfahren zum Herstellen eines Lithiumeisenphosphats nach Anspruch 13, wobei
die Kohlenstoffquelle so zu dem Lithiumeisenphosphat zugegeben wird, dass eine Menge von Kohlenstoff, die in den Lithiumeisenphosphat nach den zweiten Backen enthalten ist, 1 bis 5 Masse-% beträgt.

## Revendications

1. Procédé de production de phosphate de lithium et de fer comprenant :
une étape de préparation d'une solution aqueuse de préparation d'une solution aqueuse contenant un acide phosphorique et un acide carboxylique ;
une première étape de formation d'addition de particules de fer contenant 0,5 % en masse ou plus d'oxygène à la solution aqueuse, et de réaction de l'acide phosphorique et de l'acide carboxylique et des particules de fer les uns avec les autres dans la solution aqueuse sous une atmosphère oxydante, pour former un premier liquide réactionnel ;
une deuxième étape de formation d'addition d'une source de lithium au premier liquide réactionnel obtenu dans la première étape de formation, pour former un deuxième liquide réactionnel ;
une étape de formation de précurseur de séchage du deuxième liquide réactionnel pour former un précurseur de phosphate de lithium et de fer ; et
une étape de cuisson primaire de cuisson du précurseur de phosphate de lithium et de fer sous une atmosphère non oxydante pour obtenir du phosphate de lithium et de fer.

2. Procédé de production de phosphate de lithium et de fer selon la revendication 1, dans lequel l'acide phosphorique est un acide orthophosphorique.

3. Procédé de production de phosphate de lithium et de fer selon la revendication 1, dans lequel l'acide carboxylique est au moins l'un choisi dans le groupe consistant en un acide tartrique, un acide malique et un acide citrique.

4. Procédé de production de phosphate de lithium et de fer selon la revendication 1, dans lequel l'acide carboxylique a une teneur de 0,18 à 0,5 mole pour 1 mole de fer dans les particules de fer.

5. Procédé de production de phosphate de lithium et de fer selon la revendication 1, dans lequel l'acide carboxylique a un taux de carbone résiduel de 3 % en masse ou plus.

6. Procédé de production de phosphate de lithium et de fer selon la revendication 5, dans lequel le taux de carbone résiduel de l'acide carboxylique est de 3 à 20 % en masse.

7. Procédé de production de phosphate de lithium et de fer selon la revendication 1, dans lequel les particules de fer sont au moins des particules choisies dans le groupe consistant en poudre de fer réduite, poudre de fer atomisée et poudre de fer électrolytique.

8. Procédé de production de phosphate de lithium et de fer selon la revendication 1, dans lequel les particules de fer ont une teneur en oxygène de 0,6 à 2 % en masse.

9. Procédé de production de phosphate de lithium et de fer selon la revendication 1, dans lequel la source de lithium est un sel de lithium soluble dans l'eau.

10. Procédé de production de phosphate de lithium et de fer selon la revendication 1, dans lequel l'étape de préparation de solution aqueuse comprend la dissolution de métal ou d'un composé d'un élément à doper dans la solution aqueuse contenant l'acide phosphorique et l'acide carboxylique.

11. Procédé de production de phosphate de lithium et de fer selon la revendication 1, dans lequel l'étape de formation de précurseur comprend le séchage du deuxième liquide réactionnel par un procédé de séchage par pulvérisation pour former le précurseur de phosphate de lithium et de fer.

12. Procédé de production de phosphate de lithium et de fer selon la revendication 1, dans lequel l'étape de cuisson primaire comprend la cuisson du précurseur du phosphate de lithium et de fer sous une atmosphère non oxydante à une température de 300 °C ou plus pour obtenir le phosphate de lithium et de fer.

13. Procédé de production de phosphate de lithium et de fer selon la revendication 1, comprenant en outre une étape de cuisson secondaire de mélange du phosphate de lithium et de fer obtenu dans l'étape de cuisson primaire et d'une source de carbone, et la cuisson du mélange sous une atmosphère non oxydante en obtenant ainsi le phosphate de lithium et de fer dont la surface est recouverte de carbone.

14. Procédé de production de phosphate de lithium et de fer selon la revendication 13, dans lequel la source de carbone est une substance qui génère du carbone par décomposition thermique de celle-ci au moment de la cuisson secondaire ou du carbone conducteur.

15. Procédé de production de phosphate de lithium et de fer selon la revendication 13, dans lequel la source de carbone est ajoutée au phosphate de lithium et de fer de telle sorte qu'une quantité de carbone contenue dans le phosphate de lithium et de fer après la cuisson secondaire devienne de 1 à 5 % en masse.
